# EUROPEAN PATENT APPLICATION

(11) **EP 4 716 148 A1**
(43) Date of publication of application: **25.03.2026**
(21) Application number: 24829751.7
(22) Date of filing: 19.01.2024
(51) Int. Cl.: H04L 9/08

(54) **VALIDATION METHOD FOR BLOCKCHAIN NETWORK AND RELATED DEVICE**

(30) Priority: 29.06.2023 CN 202310786225; 31.08.2023 CN 202311117570
(71) Applicant: Huawei Cloud Computing Technologies Co., Ltd., Guiyang, Guizhou, 550025 (CN)
(72) Inventor: ZHANG, Ziyi, Guiyang, Guizhou 550025 (CN); QU, Qiang, Guiyang, Guizhou 550025 (CN); YANG, Ruijie, Guiyang, Guizhou 550025 (CN)
(74) Representative: Gill Jennings & Every LLP
(86) International application number: PCT/CN2024/073163
(87) International publication number: WO 2025/001088

(57) **Abstract**

This application provides a validation method for a blockchain network, applied to a validation system for a blockchain network. The system validates a transaction through token staking. The system includes a plurality of decentralized application nodes and a distributed validator technology DVT network. A sum of tokens for staking held by the plurality of decentralized application nodes meets a staking requirement. The method includes: The plurality of decentralized application nodes aggregate, by using a key aggregation algorithm, public keys held by the plurality of decentralized application nodes, to generate a public address of the blockchain network, and separately transfer the tokens to the public address. The plurality of decentralized application nodes transfer the tokens at the public address to a staking account, generate a plurality of staking private keys, and allocate the plurality of staking private keys to the DVT network. A plurality of DVT nodes sign a transaction by using the staking private keys respectively held by the plurality of DVT nodes, to obtain an aggregated signature, and then provide the aggregated signature for a consensus node, to participate in validation of the transaction. In this way, a scope of trusted staking is expanded, and use scenarios are prevented from being limited by staking conditions.

## Description

This application claims priorities to Chinese Patent Application No. 202310786225.3, filed with the China National Intellectual Property Administration on June 29, 2023 and entitled "VALIDATION METHOD FOR BLOCKCHAIN AND RELATED SYSTEM", and to Chinese Patent Application No. 2023111175704, filed with the China National Intellectual Property Administration on August 31, 2023 and entitled "VALIDATION METHOD FOR BLOCKCHAIN NETWORK AND RELATED DEVICE", both of which are incorporated herein by reference in their entireties.

### TECHNICAL FIELD

This application relates to the field of blockchain technologies, and in particular, to a validation method and system for a blockchain network, a computing device cluster, a computer readable storage medium, and a computer program product.

### BACKGROUND

A blockchain network is a network in which a plurality of nodes jointly maintain, by using a consensus mechanism designed based on a cryptographic technology, an ever-growing linked-list ledger (also referred to as a blockchain ledger, or a blockchain for short) that is formed by data blocks with timestamps and orderly recorded data blocks. A plurality of arbitrary nodes in the blockchain network may compute and record, into one block (block) by using a cryptographic algorithm, data exchanged in the blockchain network within a period of time, and generate a fingerprint of the block for chaining (chaining) a next data block and validation. All participating nodes in the blockchain network jointly validate whether a record is true.

Depending on different types of participating nodes in blockchain networks, the blockchain networks may be classified into permissionless blockchain networks and permissioned blockchain networks. A permissionless blockchain network, also referred to as a trustless blockchain network or a public blockchain network, is an open network, in which each user can participate in a consensus process for validating a transaction and data in the blockchain network. To ensure secure and stable operation, the permissionless blockchain network uses a series of consensus algorithms and economic incentive mechanisms to attract a large number of users to participate.

A conventional permissionless blockchain network usually includes three components: a consensus client, an execution client, and a validator client. The validator client interacts with the consensus client at a consensus layer (Consensus Layer, CL) to complete block validation, to allow users participating in the validation to gain rewards. In many consensus algorithms, participants usually need to hold a specific quantity of tokens (tokens), and stake the tokens to enter a block validation process. This greatly restricts users who can participate in validation, and consequently limits application scenarios.

### SUMMARY

This application provides a validation method for a blockchain network. The method expands a scope of trusted staking, allows a plurality of participants to form a decentralized autonomous organization to gain rewards, and prevents use scenarios from being limited by staking conditions. This application further provides a system corresponding to the method, a computing device cluster, a computer-readable storage medium, and a computer program product.

According to a first aspect, this application provides a validation method for a blockchain network. The method is applied to a validation system for a blockchain network. The system validates a transaction through token staking. The system includes a plurality of decentralized application nodes and a distributed validator technology DVT network. A sum of tokens for staking held by the plurality of decentralized application nodes meets a staking requirement. The staking requirement may be that a quantity of tokens for staking reaches a set quantity (where the set quantity may be set based on an empirical value, for example, may be set to 32).

Specifically, the plurality of decentralized application nodes aggregate, by using a key aggregation algorithm, public keys held by the plurality of decentralized application nodes, to generate a public address (for example, a public address in the blockchain network) of the blockchain network, and separately transfer the tokens to the public address. Then, the plurality of decentralized application nodes transfer the tokens at the public address to a staking account, generate a plurality of staking private keys, and allocate the plurality of staking private keys to the DVT network. A plurality of DVT nodes in the DVT network sign a transaction by using the staking private keys respectively held by the plurality of DVT nodes, to obtain an aggregated signature, and then provide the aggregated signature for a consensus node, to participate in validation of the transaction.

In the method, when a plurality of participants (decentralized application nodes) do not individually hold enough staking-eligible tokens to meet the staking requirement, tokens for staking held by the plurality of participants are transferred to a public address determined based on public keys of the plurality of participants, so that a quantity of the tokens at the public address can meet the staking requirement, and the tokens at the public address are transferred to the staking account for staking, so as to allow participation in validation of the transaction in the blockchain network. The method expands a scope of trusted staking, allows a plurality of participants to form a decentralized autonomous organization to gain rewards, and prevents use scenarios from being limited by staking conditions.

In addition, each DVT node holds a staking private key. An attacker needs to steal a plurality of staking private keys to obtain a complete transaction signature. Compared with a single-node validation solution, the method significantly reduces transaction validation risks and improves reliability. In addition, the distributed DVT network can effectively reduce correlation risks in the blockchain network caused by concentration of stake and concentration of clients.

In some possible implementations, a quantity of tokens for staking held by each of the plurality of decentralized application nodes does not meet the staking requirement. For example, each decentralized node individually holds fewer than 32 tokens for staking. In the method, a plurality of participants are organized to form a decentralized autonomous organization to participate in validation. This broadens application scenarios.

In some possible implementations, the DVT network includes the DVT nodes that are in one-to-one correspondence with the plurality of decentralized application nodes, and a quantity of the staking private keys is equal to a quantity of the DVT nodes. Correspondingly, each of the plurality of staking private keys may be allocated to one of the plurality of DVT nodes, and the staking private keys are allocated to different DVT nodes. Each DVT node may use a staking private key of the DVT node to participate in the validation of the transaction.

In the method, the DVT network is formed to replace a single validator (validator) with a multi-node distributed validator cluster, to resolve a problem of a single point of failure. In this way, even if a DVT node is faulty, remaining DVT nodes in the DVT network can sign the transaction based on the staking private keys (or referred to as private key shards) held by the DVT nodes and aggregate signatures for consensus validation, thereby improving reliability and security.

In some possible implementations, the DVT network includes primary DVT nodes and backup DVT nodes that are in one-to-one correspondence with the plurality of decentralized application nodes, and a quantity of the staking private keys is equal to a sum of a quantity of the primary DVT nodes and a quantity of the backup DVT nodes. During allocation of the staking private keys, each of the plurality of staking private keys may be allocated to one of the plurality of DVT nodes. For example, each staking private key may be allocated to one primary DVT node or one backup DVT node, and the staking private keys are allocated to different DVT nodes. When at least one of the plurality of primary DVT nodes is faulty, a backup DVT node corresponding to the at least one primary DVT node signs the transaction by using a staking private key held by the backup DVT node.

In the method, to ensure security of the DVT network, the DVT network is further structured into layers for each participant, and a backup participant is added at each layer. A dual-layer network architecture ensures that none of different participants in the DVT network has a single point of failure and that private keys are secure. Therefore, a problem of the single point of failure is resolved for the different participants by using the dual-layer network architecture.

In some possible implementations, when the DVT network uses the dual-layer network architecture, a plurality of staking keys may be generated at a time. For example, when a quantity of the decentralized application nodes is N (where N is greater than 1), the plurality of decentralized application nodes may generate 2N staking keys at a time by using a threshold key generation algorithm. In some examples, the plurality of staking keys may alternatively be generated in a plurality of phases. For example, when a quantity of the decentralized application nodes is N (where N is greater than 1), the plurality of decentralized application nodes may first generate N staking keys by using a threshold key generation algorithm. Each of the N staking keys may be sharded to obtain 2N staking keys. In this way, key security can be ensured, and key generation efficiency is high.

In some possible implementations, the plurality of decentralized application nodes may invoke a public address generation interface of a contract, and aggregate, by using the key aggregation algorithm, the public keys held by the plurality of decentralized application nodes, to generate the public address of the blockchain network. Correspondingly, during staking, the plurality of decentralized application nodes may invoke a staking interface of the contract, to transfer the tokens at the public address to the staking account.

In the method, a plurality of participants may collaboratively complete staking based on the contract, without a need for a third-party agent. A staking process is controllable and traceable, so that security is ensured.

In some possible implementations, a first decentralized application node in the plurality of decentralized application nodes may invoke an unstaking interface of the contract, to send an unstaking request to a remaining decentralized application node in the plurality of decentralized application nodes. When receiving an unstaking response sent by the remaining decentralized application node, the first decentralized application node transfers the tokens from the staking account to a public account, and distributes, to the plurality of decentralized application nodes based on the contract, the tokens transferred to the public account.

In the method, any one of a plurality of participants can initiate a staking exit process, after consent from other participants is obtained, the staking may be stopped, and the tokens in the staking account are returned to the participants based on the contract, to ensure security.

In some possible implementations, the first decentralized application node in the plurality of decentralized application nodes may further send cluster configuration information to a target node to establish the DVT network. The cluster configuration information includes a consensus algorithm. The consensus algorithm may be a crash fault tolerance CFT algorithm. Correspondingly, the plurality of DVT nodes sign the transaction by using the staking private keys respectively held by the plurality of DVT nodes, and when a quantity of signatures received by a first DVT node in the plurality of DVT nodes reaches a quantity set by using the CFT algorithm, aggregate the received signatures, to obtain the aggregated signature.

In the method, the DVT nodes in the DVT network form a decentralized autonomous organization. The decentralized organization may use the crash fault tolerance CFT algorithm, rather than being limited to using a Byzantine fault tolerance BFT algorithm. Because the CFT algorithm provides better performance and a faster processing speed and can tolerate faults in up to half of nodes, using the CFT algorithm for consensus validation in the DVT network can improve validation efficiency.

In some possible implementations, the target node includes one or more of a cloud node, an edge node, or a device-side node. In this way, an existing validator user scheme according to a proof-of-stake (proof-of-stake, POS) policy in a public blockchain system can be cloud-native. A cloud service provides interoperability between on-cloud and off-cloud environments to form the DVT network, to meet different user requirements and offer high availability. In addition, a cloud-native DVT node is allowed to participant in validation on different POS chains, and a cloud-native staking system architecture supports staking processes across multiple POS chains and provides strong concurrency capabilities.

In some possible implementations, the plurality of DVT nodes may alternatively obtain the aggregated signature without using the consensus algorithm. Specifically, at least one of the plurality of DVT nodes aggregates the staking private keys in a trusted execution environment TEE, to obtain an aggregated private key, and then signs the transaction by using the aggregated private key, to obtain the aggregated signature. In this way, efficiency of obtaining the aggregated signature can be improved, so that transaction validation can be accelerated.

In some possible implementations, the key aggregation algorithm includes a secure multi-party computation MPC algorithm. The MPC algorithm may include but is not limited to a threshold key generation algorithm. Keys generated based on the threshold key generation algorithm may be used for threshold signatures. An m-of-n threshold signature scheme refers to a digital signature scheme in which any m or more signers in a group of n signers can represent the entire group and generate a valid signature. The signature can be verified by using a group public key, which is obtained by aggregating public keys of participants. In general, the threshold signatures do not expose actual members involved in generation of the signature. In this way, security can be ensured.

According to a second aspect, this application provides a validation system for a blockchain network. The system validates a transaction through token staking. The system includes a plurality of decentralized application nodes and a distributed validator technology DVT network. A sum of tokens for staking held by the plurality of decentralized application nodes meets a staking requirement.

The plurality of decentralized application nodes are configured to aggregate, by using a key aggregation algorithm, public keys held by the plurality of decentralized application nodes, to generate a public address of the blockchain network, and separately transfer tokens to the public address.

The plurality of decentralized application nodes are further configured to transfer the tokens at the public address to a staking account, generate a plurality of staking private keys, and allocate the plurality of staking private keys to the DVT network.

A plurality of DVT nodes in the DVT network are configured to sign a transaction by using the staking private keys respectively held by the plurality of DVT nodes, to obtain an aggregated signature, and then provide the aggregated signature for a consensus node, to participate in validation of the transaction.

In some possible implementations, the DVT network includes the DVT nodes that are in one-to-one correspondence with the plurality of decentralized application nodes, and a quantity of the staking private keys is equal to a quantity of the DVT nodes.

In some possible implementations, the DVT network includes primary DVT nodes and backup DVT nodes that are in one-to-one correspondence with the plurality of decentralized application nodes, and a quantity of the staking private keys is equal to a sum of a quantity of the primary DVT nodes and a quantity of the backup DVT nodes.

The plurality of DVT nodes in the DVT network are specifically configured to:
when at least one of the plurality of primary DVT nodes is faulty, sign, by a backup DVT node corresponding to the at least one primary DVT node, the transaction by using a staking private key held by the backup DVT node.

In some possible implementations, the plurality of decentralized application nodes are specifically configured to:
invoke a public address generation interface of a contract, and aggregate, by using the key aggregation algorithm, the public keys held by the plurality of decentralized application nodes, to generate the public address of the blockchain network; and
invoke a staking interface of the contract, to transfer the tokens at the public address to the staking account.

In some possible implementations, a first decentralized application node in the plurality of decentralized application nodes is further configured to:
invoke an unstaking interface of the contract, to send an unstaking request to a remaining decentralized application node in the plurality of decentralized application nodes; and
when the first decentralized application node receives an unstaking response sent by the remaining decentralized application node, transfer the tokens from the staking account to the public account, and distribute, to the plurality of decentralized application nodes based on the contract, the tokens transferred to the public account.

In some possible implementations, the first decentralized application node in the plurality of decentralized application nodes is further configured to:
send cluster configuration information to a target node to establish the DVT network, where the cluster configuration information includes a consensus algorithm, and the consensus algorithm is a crash fault tolerance CFT algorithm.

A first DVT node in the plurality of DVT nodes is specifically configured to:
receive signatures on the transaction signed by the plurality of DVT nodes in the DVT network by using the staking private keys respectively held by the plurality of DVT nodes, and when a quantity of received signatures reaches a quantity set by using the CFT algorithm, aggregate the received signatures, to obtain the aggregated signature.

In some possible implementations, the target node includes one or more of a cloud node, an edge node, or a device-side node.

In some possible implementations, at least one of the plurality of DVT nodes is specifically configured to:
aggregate the staking private keys in a trusted execution environment TEE, to obtain an aggregated private key; and
sign the transaction by using the aggregated private key, to obtain the aggregated signature.

In some possible implementations, the key aggregation algorithm includes a secure multi-party computation MPC algorithm.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to cause the computing device or the computing device cluster to perform the validation method for a blockchain network according to any one of the first aspect or the implementations of the first aspect.

According to a fourth aspect, this application provides a computer-readable storage medium. The computer-readable storage medium stores instructions. The instructions instruct a computing device or a computing device cluster to perform the validation method for a blockchain network according to any one of the first aspect or the implementations of the first aspect.

According to a fifth aspect, this application provides a computer program product including instructions. When the computer program product runs on a computing device or a computing device cluster, the computing device or the computing device cluster is caused to perform the validation method for a blockchain network according to any one of the first aspect or the implementations of the first aspect.

In this application, the implementations according to the foregoing aspects may be further combined to provide more implementations.

### BRIEF DESCRIPTION OF DRAWINGS

To describe the technical methods in embodiments of this application more clearly, the following briefly describes the accompanying drawings for describing embodiments.
FIG. 1A is a diagram of an architecture of a validation system for a blockchain network according to an embodiment of this application;
FIG. 1B is a diagram of an architecture of another validation system for a blockchain network according to an embodiment of this application;
FIG. 2 is a diagram of networking of a validation system for a blockchain network according to an embodiment of this application;
FIG. 3 is a diagram of networking of another validation system for a blockchain network according to an embodiment of this application;
FIG. 4 is a schematic flowchart of a validation method for a blockchain network according to an embodiment of this application;
FIG. 5 is a schematic flowchart of another validation method for a blockchain network according to an embodiment of this application;
FIG. 6 is a diagram of a structure of a computing device according to an embodiment of this application;
FIG. 7 is a diagram of a structure of a computing device cluster according to an embodiment of this application; and
FIG. 8 is a diagram of a structure of another computing device cluster according to an embodiment of this application.

### DESCRIPTION OF EMBODIMENTS

Terms "first" and "second" in embodiments of this application are merely intended for description, and shall not be understood as an indication or implication of relative importance or an implicit indication of a quantity of indicated technical features. Therefore, a feature designated by "first" or "second" may explicitly or implicitly include one or more such features.

First, some technical terms in embodiments of this application are described.

A blockchain network is a decentralized network that provides ledger and smart contract (chaincode) services for application programs. The application program formed on the foregoing decentralized network is also referred to as a decentralized application (decentralized application, dAPP). A user who uses the decentralized application may be a terminal user of an application client, or an administrator of the blockchain network. Data of the decentralized application may be stored in the blockchain network. A smart contract is used for generating a transaction (for example, a transaction of writing data or reading data). The transaction may be distributed to each node in the blockchain network, and the transaction is recorded on a ledger copy of each node and cannot be tampered with.

Accounting is implemented after nodes in the blockchain network reach consensus through a consensus mechanism. In a public blockchain network (which may also be referred to as a trustless blockchain network or a permissionless blockchain network), any user can participate in a consensus process for validating a transaction in the blockchain network. To ensure secure and stable operation, the public blockchain network uses a series of consensus algorithms and incentive mechanisms to attract a large number of users to participate.

The incentive mechanisms may include proof-of-stake (proof-of-stake, POS). The proof-of-stake is a basis of the consensus mechanism. The blockchain network may use POS to implement distributed consensus. In a public blockchain network (for example, Ethereum) that supports POS, a validator user stakes a token (token), for example, Ether, to a smart contract in the blockchain network. A staked token may serve as collateral. The collateral may be destroyed if the validator user behaves dishonestly or acts negligently. Then, the validator user is responsible for checking whether a new block propagated in the network is valid. In some cases, the validator user may also create and propagate a new block.

To participate in validation of a transaction as a validator user, a user usually needs to stake a token and run an execution client (execution client), a consensus client (consensus client), and a validator (validator) in a node. When the token is staked, the user may enter an activation queue in which a speed at which a new validator user joins the network is limited. After activation, the validator user receives a new block from a peer node in the public blockchain network. A transaction delivered in the block is re-executed, and a block signature is checked to ensure that the block is valid. The validator user can then send a vote supporting the block across the network (where this process is also called attestation).

However, a staking requirement of the blockchain network that supports POS significantly restrict a quantity of users who can participate in validation. For example, in Ethereum, a user usually needs to stake 32 Ether to enter a validation process. As a result, it is difficult for many users holding fewer than 32 Ether to participate in the validation process.

In view of this, this application provides a validation method for a blockchain network. The method may be performed by a validation system for a blockchain network. The system may include a plurality of decentralized application nodes and a distributed validator technology (Distributed Validator Technology, DVT) network. A quantity of tokens for staking held by each of the plurality of decentralized application nodes does not meet a staking requirement, and a sum of tokens for staking held by the plurality of decentralized application nodes meets the staking requirement.

Specifically, the plurality of decentralized application nodes aggregate, by using a key aggregation algorithm, public keys held by the plurality of decentralized application nodes, to generate a public address of the blockchain network, and separately transfer the tokens to the public address. Then, the plurality of decentralized application nodes transfer the tokens at the public address to a staking account, generate a plurality of staking private keys, and allocate the plurality of staking private keys to the DVT network. A plurality of DVT nodes in the DVT network sign a transaction by using the staking private keys respectively held by the plurality of DVT nodes, to obtain an aggregated signature, and then provide the aggregated signature for a consensus node, to participate in validation of the transaction.

In the method, when a plurality of participants (decentralized application nodes) do not individually hold enough staking-eligible tokens to meet the staking requirement, tokens for staking held by the plurality of participants are transferred to a public address determined based on public keys of the plurality of participants, so that a quantity of the tokens at the public address can meet the staking requirement, and the tokens at the public address are transferred to the staking account for staking, so as to allow participation in validation of the transaction in the blockchain network. The method expands a scope of trusted staking, allows a plurality of participants to form a decentralized autonomous organization (Decentralized Autonomous Organization, DAO) to gain rewards, and prevents use scenarios from being limited by staking conditions.

To make the technical solutions of this application clearer and easier to understand, the following first describes a system architecture of the validation system for a blockchain network in this application with reference to the accompanying drawings.

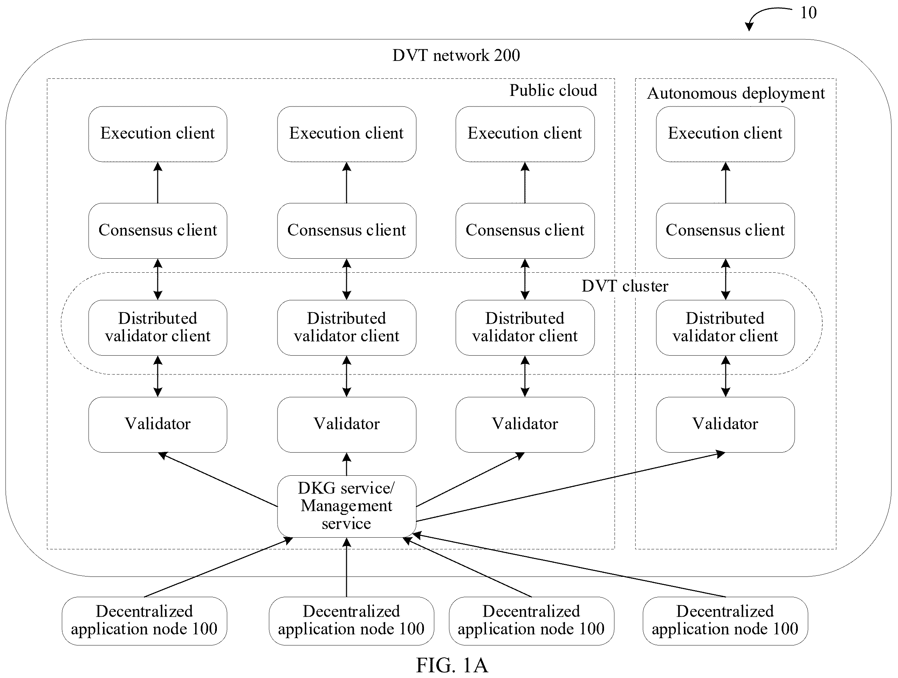

FIG. 1A is a diagram of an architecture of a validation system for a blockchain network. The system 10 includes a plurality of decentralized application nodes 100 and a DVT network 200. The DVT network 200 includes a plurality of DVT nodes. Each DVT node may include a distributed validator client (DV Client). A plurality of DV clients collaborate to complete transaction validation. During specific implementation, compared with conventional validation nodes, which include a single validator (validator) and a consensus client (also referred to as a consensus node), in the DVT node, a DV client is added based on the conventional validation nodes, where the DV client is separately connected to a validator and a consensus node (for example, a beacon node), to perform the transaction validation. In this way, compatibility with existing nodes can be achieved, and there is no need to make major modifications to the existing nodes or smart contracts.

The plurality of decentralized application nodes 100 are configured to aggregate, by using a key aggregation algorithm, public keys held by the plurality of decentralized application nodes, to generate a public address of the blockchain network, and separately transfer tokens to the public address; and then transfer the tokens at the public address to a staking account, generate a plurality of staking private keys, and allocate the plurality of staking private keys to the DVT network 200. The plurality of DVT nodes in the DVT network 200 are configured to sign a transaction by using the staking private keys respectively held by the plurality of DVT nodes, aggregate signatures on the transaction, and then provide an aggregated signature for the consensus node, to participate in validation of the transaction. Further, after the validation succeeds, the consensus node may further send the transaction to an execution node (execution client). The execution node submits the transaction to a blockchain, and records the transaction in a blockchain ledger.

In some possible implementations, the plurality of decentralized application nodes 100 may alternatively generate the staking private keys by using a distributed key generation (distributed key generation, DKG) service or a management service. A typical application of DKG is threshold key generation (Thresh-Key-Gen). A DKG protocol is formed based on security parameters. Running the DKG protocol may output a common public key pk and private keys ski (that is, the staking private keys) belonging to different participants, and an actual private key sk may be formed by aggregating private key shares that meet a quantity threshold. In a transaction validation process, based on a distributed communication network, each participant (for example, a DV client of the participant) completes distributed collaborative signing on a message m (for example, a transaction message) by using a private key share ski of the participant, to output a final verifiable signature Sig(sk, m). Each DVT node may sign the transaction. When a quantity of signatures received by a DVT node meets a requirement of a consensus algorithm, the DVT node may aggregate the signatures, and provide an aggregated signature as a verifiable signature for the consensus node, to participate in the validation of the transaction.

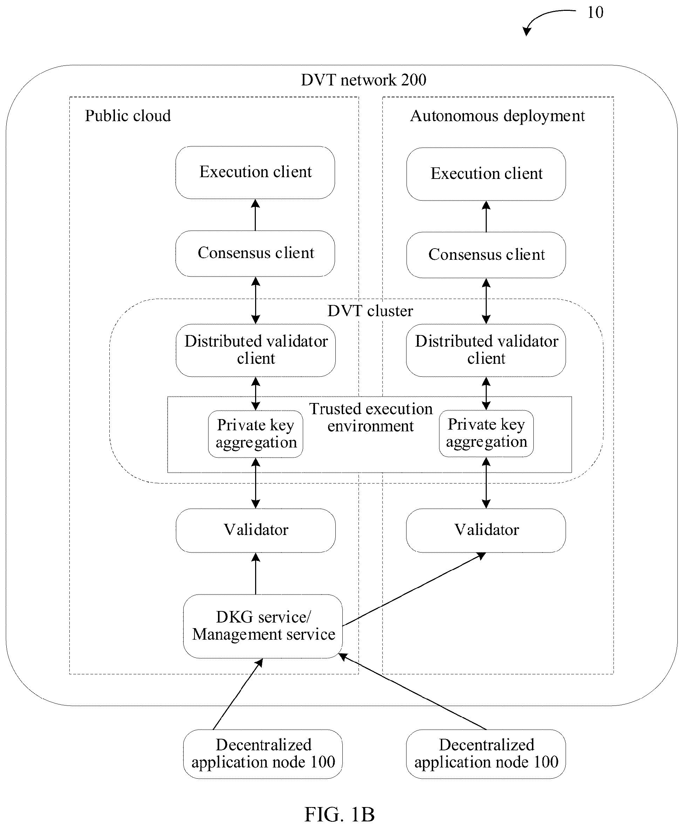

In FIG. 1A, an example in which the plurality of DVT nodes obtain the aggregated signature by using the consensus algorithm is used for description. In some possible implementations, the DVT nodes may alternatively obtain the aggregated signature without using the consensus algorithm, and participate in the validation of the transaction based on the aggregated signature. FIG. 1B is a diagram of an architecture of another validation system for a blockchain network. In the system, a DVT node (for example, a DV client in the DVT node) may aggregate the staking private keys in a trusted execution environment (Trusted Execution Environment, TEE), to obtain an aggregated private key, and sign the transaction by using the aggregated private key, to obtain the aggregated signature. The TEE is a secure area formed on a computing platform (for example, the DVT node) by using software and hardware, and can ensure that confidentiality and integrity of code and data loaded in the secure area are protected. Different from the system architecture shown in FIG. 1A, in the system architecture shown in FIG. 1B, the DVT network may include two DVT nodes, and the two DVT nodes can quickly obtain the aggregated signature without reaching an agreement by using the consensus algorithm, so that transaction validation efficiency is improved.

It should be noted that the DVT node may be a cloud node, for example, a public cloud node or a private cloud node. The cloud node may alternatively be a third-party cloud node, for example, a public cloud node or a private cloud node provided by a third-party cloud service provider. In some possible implementations, the DVT node may alternatively be an autonomously deployed node, for example, an autonomously deployed private cloud node. The cloud node may be a cloud server.

In a multi-tenant scenario on a cloud platform, a DVT network 200 in which multiple tenants join is formed, so that tenant service requirements are met, and the following features can be supported: A cloud tenant can dynamically join the DVT network 200, and the DVT network 200 in which a single validator is replaced with multiple validators can be formed, thereby improving reliability and security.

The DVT node may alternatively be an edge node or a device-side node. The edge node may be an edge server or an edge computing box (box box for short). The edge computing box is a device used for edge computing, and generally includes computing, storage, network, security, and other functions. The edge computing box may be a small computer that can be placed near an internet of things device, a sensor, or another edge device to process and compute data generated by the edge device and transmit a processing result to a cloud or another position. The device-side node may be a terminal device, including but not limited to a desktop computer, a notebook computer, and a smartphone.

This application supports interconnection of cloud nodes in different virtual private clouds (virtual private clouds, VPCs) in a public cloud to establish a DVT network 200, interconnection of a public cloud node and a private cloud node to establish a DVT network 200, interconnection of cloud nodes in a private cloud and in a third-party cloud to establish a DVT network 200, interconnection of cloud nodes in a public cloud and in a third-party cloud to establish a DVT network 200, interconnection of a private cloud and an edge node to establish a DVT network 200, or interconnection of a cloud node in a third-party cloud and an edge node to establish a DVT network.

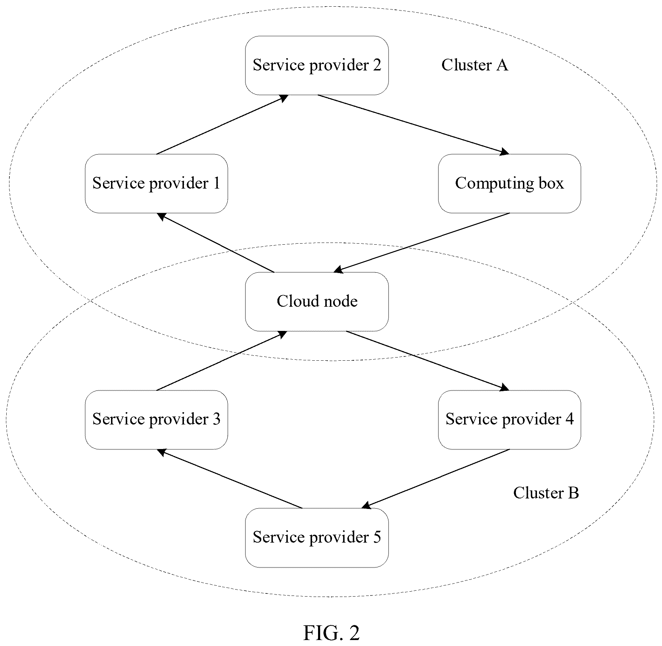

When a DVT network 200 is established by using a cloud node, the cloud node is allowed to form a cluster with different service providers (staking service providers), which serve as reliable DVT nodes to participate in validation. As shown in FIG. 2, a cloud node on the cloud platform may form a cluster A with a node of a service provider 1, a node of a service provider 2, and a box, to form a DVT network 200. The cloud node on the cloud platform may alternatively form a cluster B with a node of a service provider 3, a node of a service provider 4, and a node of a service provider 5, to form a DVT network 200. It should be noted that the cloud node on the cloud platform may alternatively form a cluster with different nodes of a same service provider, to form a DVT network 200. In consideration of security, a DV client in the DVT node may be an offline node, for example, a device-side node or an edge node, and a consensus client and an execution client in the DVT node may be deployed in a cloud environment, for example, a cloud node.

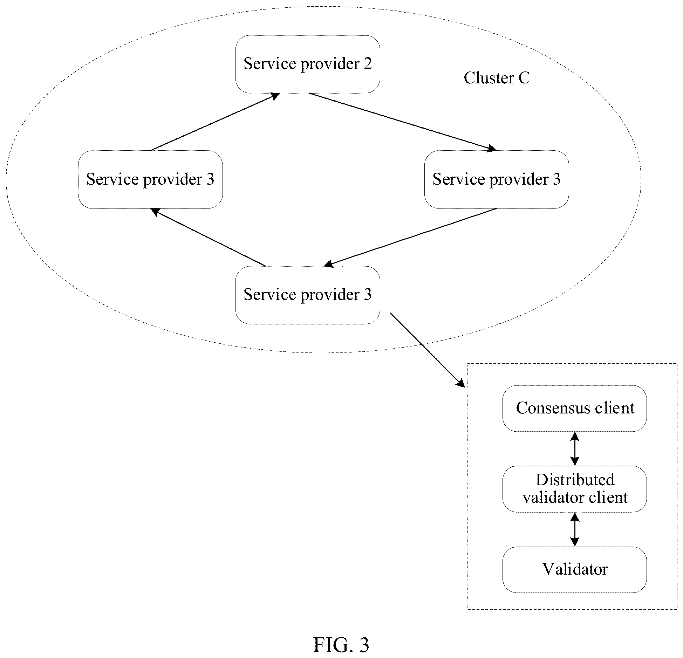

In some possible implementations, DVT nodes may alternatively be all offline nodes. As shown in FIG. 3, a node of the service provider 2 and three nodes of the service provider 3 may form a cluster, and a validator, a DV client, and a beacon node may be deployed in each node in the cluster, to form a DVT network. The DV client may aggregate the signatures on the transaction by using a DVT protocol, and then provide the aggregated signature for the consensus node, to participate in the validation of the transaction. In this way, an offline user is also allowed to join the DVT network 200, and multi-node validation is performed via the DVT network 200, thereby improving reliability and security.

Regardless of whether a cloud-native networking manner or an offline networking manner is used, in this application, a plurality of users who do not meet the staking requirement (which is, for example, staking 32 Ether) are allowed to jointly establish a DVT network, to achieve trusted validation capabilities and ensure that rewards of the users participating in the validation are not lost.

Based on the foregoing validation system 10 for a blockchain network, this application further provides a validation method for a blockchain network. The following describes the validation method for a blockchain network in this application with reference to the accompanying drawings.

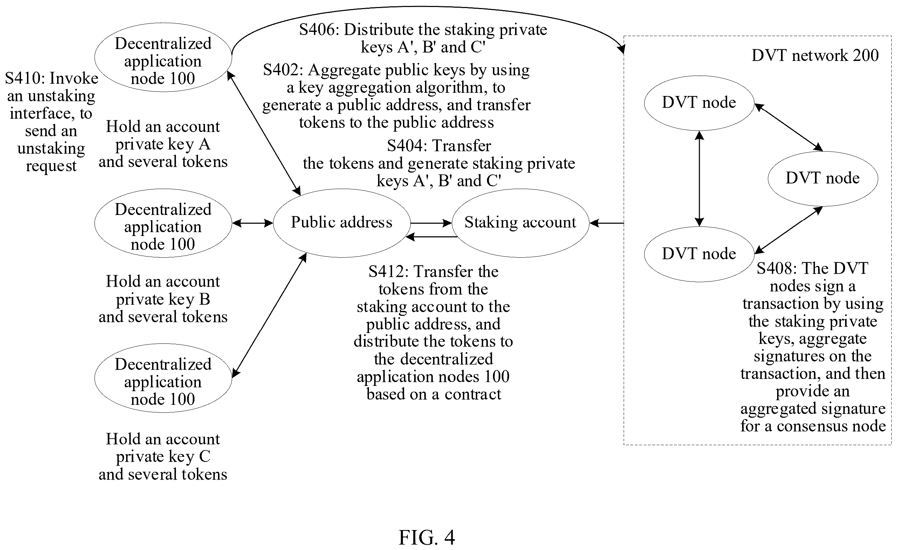

FIG. 4 is a flowchart of a validation method for a blockchain network. The method includes the following steps.

S402: A plurality of decentralized application nodes 100 aggregate, by using a key aggregation algorithm, public keys held by the plurality of decentralized application nodes, to generate a public address of the blockchain network, and separately transfer tokens to the public address.

Specifically, each decentralized application node 100 holds a public-private key pair, for example, a public-private key pair generated by using a key generation algorithm. In a validation process of the blockchain network, the plurality of decentralized application nodes 100 may aggregate, by using the key aggregation algorithm, the public keys held by the plurality of decentralized application nodes, where an aggregated public key may be considered as the public address of the blockchain network; and the plurality of decentralized application nodes 100 separately transfer the tokens to the public address.

A quantity of tokens transferred by each decentralized application node 100 does not meet a staking requirement, and a sum of the tokens transferred by the plurality of decentralized application nodes 100 meets the staking requirement. For example, assuming that the staking requirement is that a quantity of tokens for staking reaches a preset quantity, a quantity of tokens transferred by a single decentralized application node 100 is less than the preset quantity, and the sum of the tokens transferred by the plurality of decentralized application nodes 100 is equal to the preset quantity.

In consideration of security, the key aggregation algorithm may be a secure multi-party computation (Multi-Party Computation, MPC) algorithm. The MPC algorithm may include but is not limited to a threshold key generation algorithm. Keys generated based on the threshold key generation algorithm may be used for threshold signatures. An m-of-n threshold signature scheme refers to a digital signature scheme in which any m or more signers in a group of n signers can represent the entire group and generate a valid signature. The signature can be verified by using a group public key, which is obtained by aggregating public keys of participants. In general, the threshold signatures do not expose actual members involved in generation of the signature.

To ensure reliability and security, the plurality of decentralized application nodes 100 may invoke a public address generation interface of a contract, and aggregate, by using the key aggregation algorithm, the public keys held by the plurality of decentralized application nodes 100, to generate the public address of the blockchain network.

S404: The plurality of decentralized application nodes 100 transfer the tokens at the public address to a staking account, and generate a plurality of staking private keys.

During specific implementation, the plurality of decentralized application nodes 100 may invoke a staking interface of the contract, to transfer the tokens at the public address to the staking account. It should be noted that one of the plurality of decentralized application nodes 100 may be determined to trigger a staking process. For example, a first decentralized application node in the plurality of decentralized application nodes 100 may invoke the staking interface of the contract, to transfer the tokens at the public address to the staking account.

The plurality of decentralized application nodes 100 may further generate the plurality of staking private keys when generating the public address (for example, the group public key). When aggregating, by using the threshold key generation algorithm, the public keys held by the plurality of decentralized application nodes 100, the plurality of decentralized application nodes 100 may further generate, based on a DKG protocol, private key shares respectively held by different participants. The private key share may also be referred to as a private key shard, and may be used as a staking private key of each participant. Each participant obtains the private key share, but does not form a complete key, so that security of the key in a distributed validation process is ensured.

S406: The plurality of decentralized application nodes 100 allocate the plurality of staking private keys to a DVT network 200.

During specific implementation, a user may configure node information for establishing the DVT network 200, where the node information may include a node identifier or an internet protocol (Internet Protocol, IP) address of a node. The plurality of decentralized application nodes 200 allocate, based on the node information for establishing the DVT network 200, the plurality of staking private keys to nodes for establishing the DVT network 200.

In some possible implementations, the DVT network 200 includes DVT nodes that are in one-to-one correspondence with the plurality of decentralized application nodes 100. A quantity of the staking private keys is equal to a quantity of the DVT nodes. Correspondingly, each of the plurality of staking private keys may be allocated to one of the plurality of DVT nodes, and the staking private keys are allocated to different DVT nodes. In other words, the staking private key may be in one-to-one correspondence with the DVT node. Each DVT node may use a staking private key of the DVT node to participate in validation of a transaction.

In some other possible implementations, the DVT network 200 may further resolve a problem of a single point of failure for different participants by using a dual-layer network architecture. Specifically, the DVT network 200 includes primary DVT nodes and backup DVT nodes that are in one-to-one correspondence with the plurality of decentralized application nodes 100. A quantity of the staking private keys is equal to a sum of a quantity of the primary DVT nodes and a quantity of the backup DVT nodes. During allocation of the staking private keys, each of the plurality of staking private keys may be allocated to one of the plurality of DVT nodes. For example, each staking private key may be allocated to one primary DVT node or one backup DVT node, and the staking private keys are allocated to different DVT nodes. Further, a full set of a validator, DV client, and beacon node may be deployed on the backup DVT node, to ensure that when a primary DVT node is faulty or a validator, DV client, or beacon node in the primary DVT node is faulty, a backup DVT node corresponding to the faulty primary DVT node can participate in the validation of the transaction in place of the primary DVT node.

In the solution of the dual-layer network architecture, a plurality of staking keys may be generated at a time. For example, when a quantity of the decentralized application nodes 100 is N (where N is greater than 1), the plurality of decentralized application nodes 100 may generate 2N staking keys at a time by using the threshold key generation algorithm. In some examples, the plurality of staking keys may alternatively be generated in a plurality of phases. For example, when a quantity of the decentralized application nodes 100 is N (where N is greater than 1), the plurality of decentralized application nodes 100 may first generate N staking keys by using the threshold key generation algorithm. Each of the N staking keys may be sharded to obtain 2N staking keys.

S408: The plurality of DVT nodes in the DVT network 200 sign the transaction by using the staking private keys respectively held by the plurality of DVT nodes, aggregate signatures on the transaction, and then provide an aggregated signature for a consensus node, to participate in the validation of the transaction.

Specifically, the plurality of DVT nodes may sign the transaction by using a threshold signature algorithm, to participate in the validation of the transaction. An m-of-n threshold signature scheme refers to a digital signature scheme in which any m or more signers in a group of n signers can represent the entire group and generate a valid signature. A subset including any m of the n signers can generate the valid signature. During creation of a signature, each member contributes a signature fragment to a specific combiner. The combiner may derive an intended threshold signature from signature fragments. Based on this, the plurality of DVT nodes sign the transaction by using the staking private keys respectively held by the plurality of DVT nodes, to obtain signature fragments. One DVT node (for example, a DVT node determined through election or voting) may aggregate a part of the received signature fragments, to obtain a complete and valid signature.

In this embodiment, the first decentralized application node in the plurality of decentralized application nodes 100 sends cluster configuration information to a target node to establish the DVT network. The target node may be a corresponding node for establishing the DVT network. The cluster configuration information may include a consensus algorithm. A conventional blockchain network that supports POS usually uses a Byzantine fault tolerance (Byzantine Fault Tolerance, BFT) algorithm. In this application, the consensus algorithm can be configured as a BFT algorithm, and the consensus algorithm can also be configured as a crash fault tolerance (Crash Fault Tolerance, CFT) algorithm.

Consensus algorithms are classified into the following types depending on whether a Byzantine fault is tolerated: the CFT algorithm and the BFT algorithm. The CFT algorithm is a non-ordinary fault tolerance algorithm. When an ordinary fault, for example, a network or disk fault or a server breakdown, occurs in a system, consensus can still be reached on a proposal. The CFT algorithm may include but is not limited to Paxos, Raft, and the like. The CFT algorithm provides better performance and a faster processing speed, and can tolerate faults in up to half of nodes. In addition to the ordinary fault in a system consensus process, the BFT algorithm can further tolerate Byzantine faults like deliberate deception (for example, forging transaction execution results) of a part of the nodes. The BFT algorithm includes hotstaff, practical Byzantine fault tolerance (PBFT, Practical Byzantine Fault Tolerance), federated Byzantine agreement (Federated Byzantine Agreement, FBA), delegated Byzantine fault tolerance (Delegated Byzantine Fault Tolerance, dBFT), and the like. The performance of the BFT algorithm is lower than that of the CFT algorithm. The BFT algorithm can tolerate faults in a maximum of one third of nodes.

Based on this, in a signature aggregation process, when a quantity of signatures received by a first DVT node in the plurality of DVT nodes reaches a quantity set by using the CFT algorithm, the first DVT node may perform aggregation based on the received signatures. The first DVT node may aggregate the received signatures by using a BLS (that is, Boneh-Lynn-Shacham) signature algorithm. BLS is an algorithm that can implement signature aggregation and key aggregation. The BLS algorithm can combine signatures and public keys in a transaction into a single signature and public key, and a combination process is invisible. In this way, it is impossible to trace whether the signature or public key is obtained through combination or which signatures or public keys are combined to obtain the signature or public key, so that security is ensured.

Further, when the DVT network 200 uses the dual-layer network architecture, when at least one of the plurality of primary DVT nodes is faulty, a backup DVT node corresponding to the at least one primary DVT node signs the transaction by using a staking private key held by the backup DVT node. This resolves a problem that the validation fails due to a single point of failure in any one of the different participants.

It should be noted that S408 is merely an implementation of obtaining the aggregated signature by the plurality of DVT nodes in the DVT network 200. In another possible implementation of this embodiment of this application, the DVT node may obtain the aggregated signature in another manner. For example, the DVT node may alternatively aggregate the staking private keys in a TEE, to obtain an aggregated private key, and use the aggregated private key to sign the transaction, to obtain the aggregated signature.

S410: The first decentralized application node in the plurality of decentralized application nodes 100 invokes an unstaking interface of the contract, to send an unstaking request to a remaining decentralized application node in the plurality of decentralized application nodes 100.

When a participant wants to stop staking (stop the transaction), the participant may trigger an unstaking process via the contract. To ensure security, the participant that initiates unstaking may stop the staking after consent from other participants is obtained. Specifically, the first decentralized application node in the plurality of decentralized application nodes 100 invokes the unstaking interface of the contract, to send the unstaking request to the remaining decentralized application node in the plurality of decentralized application nodes 100. The first decentralized application node may trigger, based on a staking private key corresponding to the first decentralized application node, unstaking. For example, the first decentralized application node may invoke the unstaking interface of the contract, to generate the unstaking request, where the unstaking request may carry a signature on a message signed by using the staking private key.

S412: When the first decentralized application node receives an unstaking response sent by the remaining decentralized application node, the first decentralized application node transfers the tokens from the staking account to a public account, and distributes, to the plurality of decentralized application nodes 100 based on the contract, the tokens transferred to the public account.

The unstaking response may be a response indicating agreement to stop the staking. When the first decentralized application node receives the unstaking response sent by the remaining decentralized application node, it indicates that all participants participating in the staking agree to stop the staking. Based on this, the first decentralized application node may transfer the tokens from the staking account to the public account, and distribute, to the plurality of decentralized application nodes 100 based on the contract, the tokens transferred to the public account.

It should be noted that when distributing, to the plurality of decentralized application nodes 100 based on the contract, the tokens transferred to the public account, the first decentralized application node may perform distribution based on the quantity of tokens transferred by each decentralized application node 100. For example, each decentralized application node 100 transfers 11 Ether to start the staking, and therefore, 11 Ether may be distributed to each decentralized application node 100 during unstaking.

S410 and S412 are optional steps of this application. The validation method for a blockchain network in this embodiment of this application may be alternatively implemented without performing S410 and S412.

Based on the foregoing descriptions, it can be learned that, in the validation method for a blockchain network in this application, when a plurality of participants (decentralized application nodes) do not individually hold enough staking-eligible tokens to meet the staking requirement, tokens for staking held by the plurality of participants are transferred to a public address determined based on public keys of the plurality of participants, so that a quantity of the tokens at the public address can meet the staking requirement, and the tokens at the public address are transferred to the staking account for staking, so as to allow participation in the validation of the transaction in the blockchain network. The method expands a scope of trusted staking, allows a plurality of participants to construct a DAO to gain rewards, and prevents use scenarios from being limited by staking conditions.

Either the plurality of decentralized application nodes 100 jointly staking the tokens enough to meet the staking requirement or a single decentralized application node 100 individually staking tokens enough to meet the staking requirement may participate in the validation of the transaction. The following describes the validation process in detail with reference to the accompanying drawings.

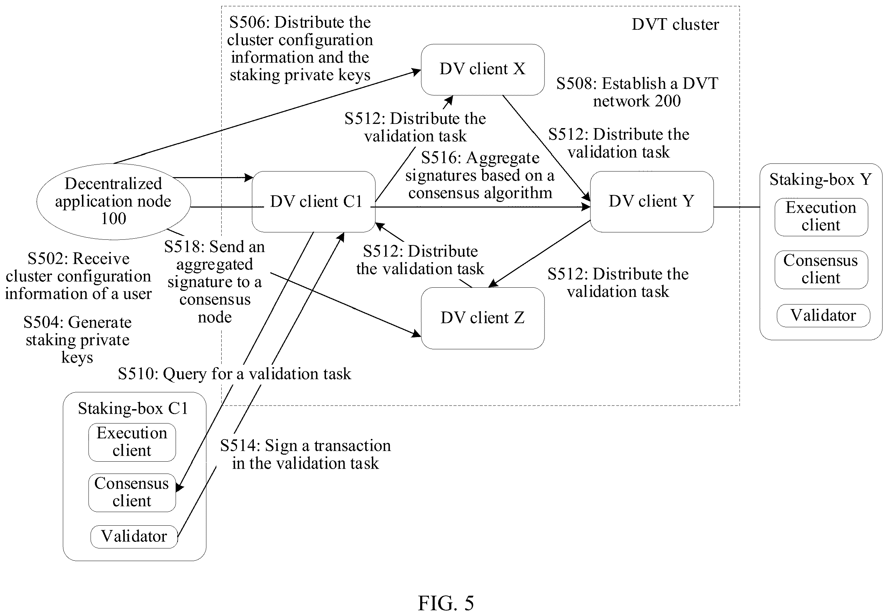

FIG. 5 is a schematic flowchart of a validation method for a blockchain network. The method may be applied to a validation system 10 for a blockchain network. The validation system 10 for a blockchain network includes decentralized application nodes 100 and a DVT network 200. The decentralized application node 100 sends staking private keys (also referred to as key shards) to target nodes, and the target nodes are used for establishing the DVT network 200 based on the staking private keys. The method may specifically include the following steps.

S502: The decentralized application node 100 receives cluster configuration information of a user.

S504: The decentralized application node 100 generates a plurality of staking private keys based on the cluster configuration information.

S506: The decentralized application node 100 sends the cluster configuration information and the staking private keys to the target nodes.

The cluster configuration information may include a consensus algorithm selected by the user. When there are a plurality of decentralized application nodes 100, all the plurality of decentralized application nodes 100 may select the consensus algorithm. For example, the decentralized application node 100 may select raft as the consensus algorithm, where raft is a CFT algorithm and has high performance. In some examples, the decentralized application node 100 may alternatively select hotstaff as the consensus algorithm, so that a Byzantine fault can be tolerated.

The cluster configuration information may further include a quantity of nodes in a cluster. In other words, the quantity of nodes in the cluster corresponds to a quantity of participants, and the decentralized application node 100 may generate the plurality of staking private keys based on the quantity of nodes in the cluster. A quantity of the staking private keys may be equal to the quantity of nodes in the cluster.

The staking private keys may be generated by the decentralized application node 100. During specific implementation, the decentralized application node 100 may generate the staking private keys by using a tool, for example, a DKG service. For a specific implementation of generating the staking private keys, refer to related descriptions in the embodiment shown in FIG. 4. Further, the decentralized application node 100 may also distribute the staking private keys to the target nodes by using the DKG service.

The cluster configuration information may further include node information for establishing a cluster, specifically, node information for establishing the DVT network 200. The node information may be a node identifier or an IP address of the target node.

S508: The target nodes establish the DVT network 200 based on the cluster configuration information.

The target nodes may be initialized based on the cluster configuration information, to form a DVT cluster. The DVT cluster includes a plurality of DV clients. A staking-box may further be registered in the target node. For example, a staking-box C1 is registered in a node C1, and a staking-box Y is registered in a node Y. The staking-box includes a validator, a beacon node (consensus client), and an execution client (execution client). Information about a consensus layer (consensus layer, CL) and an execution layer (execution layer, EL) in the staking-box may be configured in the DVT cluster. The DV client in the DVT cluster may monitor a node state in the staking-box. When the node state indicates that there is a liveness issue in a node, monitoring may be switched to another DV client node.

The DVT network 200 may be formed by the DV clients in the DVT cluster and staking-boxes monitored by the DV clients. A node in which the DV client and the validator, beacon node, and execution client in the staking-box are deployed may be a DVT node in the DVT network 200. Each DVT node in the DVT network 200 holds one staking private key (specifically, a private key shard), and only a signature obtained by aggregating m of n staking private keys is valid. Therefore, participants do not need to worry about a loss of the private keys, and security of the private keys is ensured.

It should be noted that the DVT network 200 may be established in a form of a consortium blockchain. The consortium blockchain is a type of blockchain deployment model used exclusively by a specific group of customers. Only authorized nodes can access the consortium blockchain, and the nodes that access the consortium blockchain can read and write data according to rules. Networking by the target nodes in the form of a consortium blockchain can improve networking efficiency, improve consensus efficiency, and improve performance of the DVT network 200.

S510: The DV client in the DVT node queries a consensus node, to obtain a validation task.

The validation task is a transaction that needs to be validated. Specifically, the DV client may invoke a task query interface of a contract, to query the consensus node, for example, a beacon mode, for the validation task. The validation task may be a transaction that needs to be validated by a validator, for example, may be an operation that the validator needs to perform in a slot (slot) of a next time period (epoch).

S512: The DV client in the DVT node distributes the validation task to another DV client in the DVT cluster.

As shown in FIG. 5, a DV client C1 may send the validation task to a DV client X, the DV client X may send the validation task to a DV client Y, and the DV client Y then sends the validation task to a DV client Z. The DV client Z may be a DV client deployed in a cloud node on a cloud platform. In this way, each DV client in the DVT node obtains the validation task. It should be noted that FIG. 5 shows merely an example implementation of distributing the validation task to the DVT cluster. In another possible implementation of this embodiment of this application, the validation task may be distributed in another manner.

S514: The DV client in the DVT node signs the transaction based on the validation task obtained through query.

The DV client may schedule a VC interface of the validator client to sign the transaction in the validation task.

S516: The DV client aggregates signatures based on the consensus algorithm, to obtain an aggregated signature.

S518: The DV client sends the aggregated signature to the consensus node at the consensus layer, to participate in validation of the transaction.

One DV client may be determined from the plurality of DV clients in the DVT cluster to perform signature aggregation. For example, the plurality of DV clients may vote to select one DV client to perform the signature aggregation. In this embodiment, it is assumed that the DV client C1 is the DV client C1 for performing the signature aggregation.

After receiving signatures that meet a requirement of the consensus algorithm, the DV client C1 may aggregate the signatures based on the consensus algorithm. The following provides examples in which the consensus algorithm is either a BFT algorithm or a CFT algorithm for description.

When the consensus algorithm is the BFT algorithm, generally, faults in 1/3 of nodes can be tolerated. In other words, the signature aggregation can be performed when signatures of more than 2/3 (including 2/3) of the nodes are received. In this example, there are four nodes in the DVT cluster, and more than 2/3 of the nodes may indicate three nodes. In other words, after obtaining signatures of three nodes (including a signature of the DV client C1), the DV client C1 may aggregate the signatures.

When the consensus algorithm is the CFT algorithm, generally, faults in 1/2 of nodes can be tolerated. In other words, the signature aggregation can be performed when signatures of more than 1/2 (including 1/2) of the nodes are received. In this example, there are four nodes in the DVT cluster, and more than 1/2 of the nodes may indicate two nodes. In other words, after obtaining signatures of two nodes (including a signature of the DV client C1), the DV client C1 may aggregate the signatures.

When the CFT algorithm is used, the DV client can quickly collect required signatures, and aggregate the collected signatures, to obtain an aggregated signature, and provide the aggregated signature for the consensus node, to participate in the validation of the transaction. Compared with the BFT algorithm, the CFT algorithm can obtain the aggregated signature more quickly, to participate in the validation of the transaction, and therefore provides higher performance.

It should be noted that the DV client may alternatively obtain the aggregated signature without using the consensus algorithm. For example, when the DVT network includes two DVT nodes, a DV client in the DVT node may invoke a TEE component to aggregate the staking private keys. An aggregated private key may be considered as a complete private key. The DV client signs the transaction by using the aggregated private key, to obtain a complete transaction signature, which is also referred to as the aggregated signature.

This application further provides a validation system 10 for a blockchain network. The validation system 10 validates a transaction through token staking. As shown in FIG. 1A or FIG. 1B, the validation system 10 includes a plurality of decentralized application nodes 100 and a DVT network 200, where a sum of tokens for staking held by the plurality of decentralized application nodes meets a staking requirement.

The plurality of decentralized application nodes 100 are configured to aggregate, by using a key aggregation algorithm, public keys held by the plurality of decentralized application nodes 100, to generate a public address of the blockchain network, and separately transfer tokens to the public address.

The plurality of decentralized application nodes 100 are further configured to transfer the tokens at the public address to a staking account, generate a plurality of staking private keys, and allocate the plurality of staking private keys to the DVT network 200.

A plurality of DVT nodes in the DVT network 200 are configured to sign a transaction by using the staking private keys respectively held by the plurality of DVT nodes, to obtain an aggregated signature, and then provide the aggregated signature for a consensus node, to participate in validation of the transaction.

For example, the decentralized application node 100 and the DVT node in the DVT network 200 may be implemented by using hardware, or may be implemented by using software.

When implemented by using software, each of the decentralized application node 100 and the DVT node in the DVT network 200 may be an application program, for example, a computing engine or a client (dAPP or a DV client), running on a computer device. The application program may be provided as a virtualization service for a user to use. The virtualization service may include a virtual machine (virtual machine, VM) service, a bare metal server (bare metal server, BMS) service, and a container (container) service. The VM service may be a service of forming a virtual machine (virtual machine, VM) resource pool through virtualization on a plurality of physical hosts (for example, computing devices) by using a virtualization technology, to provide VMs on demand for users to use. The BMS service is a service of forming a BMS resource pool through virtualization on a plurality of physical hosts to provide BMSs on demand for users to use. The container service is a service of forming a container resource pool through virtualization on a plurality of physical hosts to provide containers on demand for users to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, BMS service, and container service in the virtualization service are merely specific examples. During actual application, the virtualization service may alternatively be another lightweight or heavyweight virtualization service. This is not specifically limited herein.

When implemented by using hardware, each of the decentralized application node 100 and the DVT node in the DVT network 200 may include at least one computing device, for example, a server. Alternatively, each of the decentralized application node 100 and the DVT node in the DVT network 200 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

In some possible implementations, the DVT network 200 includes the DVT nodes that are in one-to-one correspondence with the plurality of decentralized application nodes, and a quantity of the staking private keys is equal to a quantity of the DVT nodes.

In some possible implementations, the DVT network 200 includes primary DVT nodes and backup DVT nodes that are in one-to-one correspondence with the plurality of decentralized application nodes, and a quantity of the staking private keys is equal to a sum of a quantity of the primary DVT nodes and a quantity of the backup DVT nodes.

The plurality of DVT nodes in the DVT network 200 are specifically configured to:
when at least one of the plurality of primary DVT nodes is faulty, sign, by a backup DVT node corresponding to the at least one primary DVT node, the transaction by using a staking private key held by the backup DVT node.

In some possible implementations, the plurality of decentralized application nodes 100 are specifically configured to:
invoke a public address generation interface of a contract, and aggregate, by using the key aggregation algorithm, the public keys held by the plurality of decentralized application nodes, to generate the public address of the blockchain network; and
invoke a staking interface of the contract, to transfer the tokens at the public address to the staking account.

In some possible implementations, a first decentralized application node in the plurality of decentralized application nodes 100 is further configured to:
invoke an unstaking interface of the contract, to send an unstaking request to a remaining decentralized application node in the plurality of decentralized application nodes; and
when the first decentralized application node receives an unstaking response sent by the remaining decentralized application node, transfer the tokens from the staking account to the public account, and distribute, to the plurality of decentralized application nodes based on the contract, the tokens transferred to the public account.

In some possible implementations, the first decentralized application node in the plurality of decentralized application nodes 100 is further configured to:
send cluster configuration information to a target node to establish the DVT network, where the cluster configuration information includes a consensus algorithm, and the consensus algorithm is a crash fault tolerance CFT algorithm.

The first DVT node in the plurality of DVT nodes is specifically configured to:
receive signatures on the transaction signed by the plurality of DVT nodes in the DVT network by using the staking private keys respectively held by the plurality of DVT nodes, and when a quantity of received signatures reaches a quantity set by using the CFT algorithm, aggregate the received signatures.

The received signatures may include a signature on the transaction signed by the first DVT node using the staking private key. For example, if the first DVT node receives a signature on the transaction sent from another DVT node and a signature on the transaction of the first DVT node, the quantity of the received signatures may be 2.

In some possible implementations, the target node includes one or more of a cloud node, an edge node, or a device-side node.

In some possible implementations, at least one of the plurality of DVT nodes is specifically configured to:
aggregate the staking private keys in a trusted execution environment TEE, to obtain an aggregated private key; and
sign the transaction by using the aggregated private key, to obtain the aggregated signature.

In some possible implementations, the key aggregation algorithm includes a secure multi-party computation MPC algorithm.

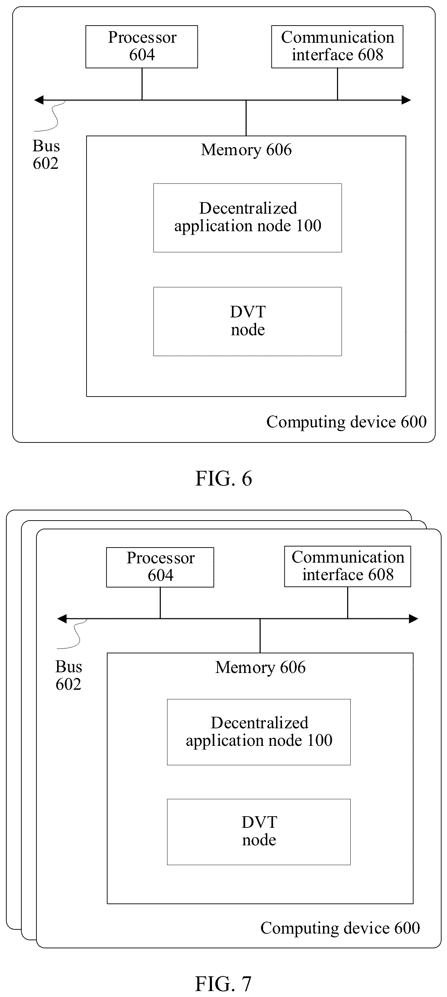

This application further provides a computing device 600. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that a quantity of processors and a quantity of memories in the computing device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 6. However, it does not mean that there is only one bus or only one type of bus. The bus 602 may include a path for transmitting information between components (for example, the memory 606, the processor 604, and the communication interface 608) of the computing device 600.

The processor 604 may include any one or more of processors such as a central processing unit (central processing unit, CPU), a graphics processing unit (graphics processing unit, GPU), a micro processor (micro processor, MP), or a digital signal processor (digital signal processor, DSP).

The memory 606 may include a volatile memory (volatile memory), for example, a random access memory (random access memory, RAM). The memory 606 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 606 stores executable program code, and the processor 604 executes the executable program code to implement the validation method for a blockchain network. Specifically, the memory 606 stores instructions used by the validation system 10 for a blockchain network to perform the validation method for a blockchain network. It should be noted that the processor 604 may execute the program code, to implement steps performed by the decentralized application node 100 in the validation method for a blockchain network, or implement steps performed by the DVT node in the DVT network 200. For example, the memory 606 stores instructions for performing steps by the decentralized application node 100 in the validation system 10 for a blockchain network, and the processor 604 executes the instructions, to perform the steps performed by the decentralized application node 100. For another example, the memory 606 stores instructions for performing steps by the DVT node in the validation system 10 in the blockchain network, and the processor 604 executes the instructions, to perform the steps performed by the DVT node.

The communication interface 608 uses a transceiver module, for example, but not limited to, a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

As shown in FIG. 7, the computing device cluster includes at least one computing device 600. The memory 606 in one or more computing devices 600 in the computing device cluster may store same instructions used by the validation system 10 for a blockchain network to perform the validation method for a blockchain network.

In some possible implementations, the one or more computing devices 600 in the computing device cluster may alternatively be configured to execute a part of the instructions used by the validation system 10 for a blockchain network to perform the validation method for a blockchain network. In other words, a combination of one or more computing devices 600 may jointly execute the instructions used by the validation system 10 for a blockchain network to perform the validation method for a blockchain network.

It should be noted that memories 606 in different computing devices 600 in the computing device cluster may store different instructions for performing some functions of the validation system for a blockchain network.

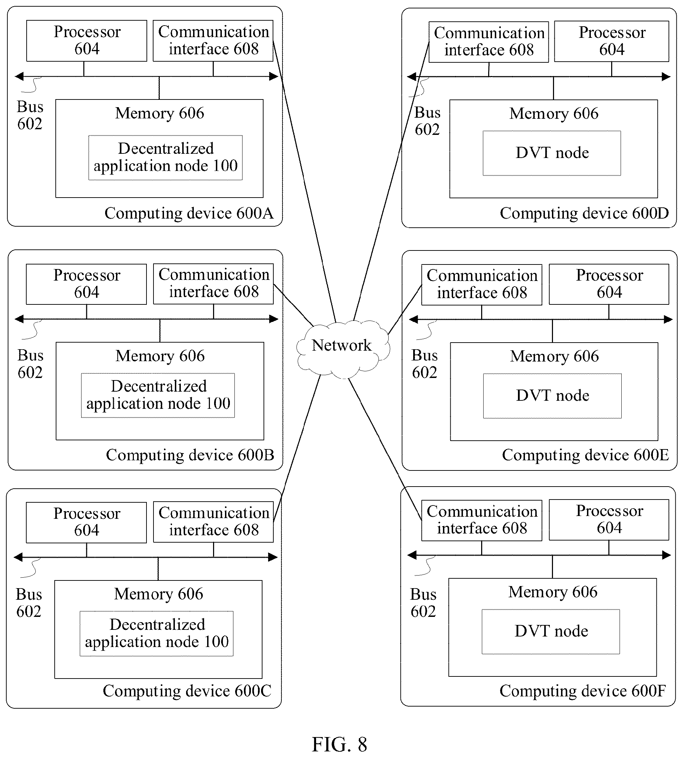

FIG. 8 shows a possible implementation. The one or more computing devices in the computing device cluster may be connected via a network. The network may be a wide area network, a local area network, or the like. As shown in FIG. 8, computing devices 600A, 600B, and 600C are connected to computing devices 600D, 600E, and 600F via the network. Specifically, each computing device is connected to the network via a communication interface in the computing device. In such possible implementation, memories 606 in the computing devices 600A, 600B, and 600C store instructions for performing functions of the decentralized application node 100. In addition, memories 606 in the computing devices 600D, 600E, and 600F store instructions for performing functions of the DVT node.

A connection manner between computing devices in a cluster shown in FIG. 8 may be configured in consideration of the fact that the validation method for a blockchain network provided in this application requires a large amount of computing power for consensus and validation. Therefore, functions implemented by the DVT node are considered to be performed by the computing devices 600D, 600E, and 600F.

It should be understood that, functions of the computing devices 600A, 600B, and 600C shown in FIG. 8 may alternatively be completed by a plurality of computing devices 600. Similarly, functions of the computing device 600D, 600E, and 600F may alternatively be implemented by a plurality of computing devices 600.

Embodiments of this application further provide a computer-readable storage medium. The computer-readable storage medium may be any usable medium that can be used for storage by a computing device, or a data storage device, like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the validation method for a blockchain network applied to the validation system 10 for a blockchain network.

An embodiment of this application further provides a computer program product including instructions. The computer program product may be software or a program product that includes instructions and that can run on a computing device or can be stored on any usable medium. When the computer program product runs on at least one computing device, at least one computing device is caused to perform the validation method for a blockchain network.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or make equivalent replacements to some technical features thereof, without departing from the protection scope of the technical solutions of embodiments of the present invention.

## Claims

1. A validation method for a blockchain network, applied to a validation system for a blockchain network, wherein the system validates a transaction through token staking, the system comprises a plurality of decentralized application nodes and a distributed validator technology DVT network, a sum of tokens for staking held by the plurality of decentralized application nodes meets a staking requirement, and the method comprises:
aggregating, by the plurality of decentralized application nodes by using a key aggregation algorithm, public keys held by the plurality of decentralized application nodes, to generate a public address of the blockchain network, and separately transferring the tokens to the public address;
transferring, by the plurality of decentralized application nodes, the tokens at the public address to a staking account, generating a plurality of staking private keys, and allocating the plurality of staking private keys to the DVT network; and
signing, by a plurality of DVT nodes in the DVT network, a transaction by using the staking private keys respectively held by the plurality of DVT nodes, to obtain an aggregated signature, and then providing the aggregated signature for a consensus node, to participate in validation of the transaction.

2. The method according to claim 1, wherein the DVT network comprises the DVT nodes that are in one-to-one correspondence with the plurality of decentralized application nodes, and a quantity of the staking private keys is equal to a quantity of the DVT nodes.

3. The method according to claim 1, wherein the DVT network comprises primary DVT nodes and backup DVT nodes that are in one-to-one correspondence with the plurality of decentralized application nodes, and a quantity of the staking private keys is equal to a sum of a quantity of the primary DVT nodes and a quantity of the backup DVT nodes; and
signing, by the plurality of DVT nodes in the DVT network, the transaction by using the staking private keys respectively held by the plurality of DVT nodes comprises:
when at least one of the plurality of primary DVT nodes is faulty, signing, by a backup DVT node corresponding to the at least one primary DVT node, the transaction by using a staking private key held by the backup DVT node.

4. The method according to any one of claims 1 to 3, wherein aggregating, by the plurality of decentralized application nodes by using the key aggregation algorithm, the public keys held by the plurality of decentralized application nodes, to generate the public address of the blockchain network comprises:
invoking, by the plurality of decentralized application nodes, a public address generation interface of a contract, and aggregating, by using the key aggregation algorithm, the public keys held by the plurality of decentralized application nodes, to generate the public address of the blockchain network; and
transferring, by the plurality of decentralized application nodes, the tokens at the public address to the staking account comprises:
invoking, by the plurality of decentralized application nodes, a staking interface of the contract, to transfer the tokens at the public address to the staking account.

5. The method according to any one of claims 1 to 4, wherein the method further comprises:
invoking, by a first decentralized application node in the plurality of decentralized application nodes, an unstaking interface of the contract, to send an unstaking request to a remaining decentralized application node in the plurality of decentralized application nodes; and
when receiving an unstaking response sent by the remaining decentralized application node, transferring, by the first decentralized application node, the tokens from the staking account to the public account, and distributing, to the plurality of decentralized application nodes based on the contract, the tokens transferred to the public account.

6. The method according to any one of claims 1 to 5, wherein the method further comprises:
sending, by the first decentralized application node in the plurality of decentralized application nodes, cluster configuration information to a target node to establish the DVT network, wherein the cluster configuration information comprises a consensus algorithm, and the consensus algorithm is a crash fault tolerance CFT algorithm; and
signing, by the plurality of DVT nodes in the DVT network, the transaction by using the staking private keys respectively held by the plurality of DVT nodes, to obtain the aggregated signature comprises:
signing, by the plurality of DVT nodes, the transaction by using the staking private keys respectively held by the plurality of DVT nodes, and when a quantity of signatures received by a first DVT node in the plurality of DVT nodes reaches a quantity set by using the CFT algorithm, aggregating the received signatures, to obtain the aggregated signature.

7. The method according to claim 6, wherein the target node comprises one or more of a cloud node, an edge node, or a device-side node.

8. The method according to any one of claims 1 to 5, wherein signing, by the plurality of DVT nodes in the DVT network, the transaction by using the staking private keys respectively held by the plurality of DVT nodes, to obtain the aggregated signature comprises:
aggregating, by at least one of the plurality of DVT nodes, the staking private keys in a trusted execution environment TEE, to obtain an aggregated private key; and
signing, by the at least one DVT node, the transaction by using the aggregated private key, to obtain the aggregated signature.

9. A validation system for a blockchain network, wherein the system validates a transaction through token staking, the system comprises a plurality of decentralized application nodes and a distributed validator technology DVT network, and a sum of tokens for staking held by the plurality of decentralized application nodes meets a staking requirement;
the plurality of decentralized application nodes are configured to aggregate, by using a key aggregation algorithm, public keys held by the plurality of decentralized application nodes, to generate a public address of the blockchain network, and separately transfer the tokens to the public address;
the plurality of decentralized application nodes are further configured to transfer the tokens at the public address to a staking account, generate a plurality of staking private keys, and allocate the plurality of staking private keys to the DVT network; and
a plurality of DVT nodes in the DVT network are configured to sign a transaction by using the staking private keys respectively held by the plurality of DVT nodes, to obtain an aggregated signature, and then provide the aggregated signature for a consensus node, to participate in validation of the transaction.

10. The system according to claim 9, wherein the DVT network comprises the DVT nodes that are in one-to-one correspondence with the plurality of decentralized application nodes, and a quantity of the staking private keys is equal to a quantity of the DVT nodes.

11. The system according to claim 8, wherein the DVT network comprises primary DVT nodes and backup DVT nodes that are in one-to-one correspondence with the plurality of decentralized application nodes, and a quantity of the staking private keys is equal to a sum of a quantity of the primary DVT nodes and a quantity of the backup DVT nodes; and
the plurality of DVT nodes in the DVT network are specifically configured to:
when at least one of the plurality of primary DVT nodes is faulty, sign, by a backup DVT node corresponding to the at least one primary DVT node, the transaction by using a staking private key held by the backup DVT node.

12. The system according to any one of claims 9 to 11, wherein the plurality of decentralized application nodes are specifically configured to:
invoke a public address generation interface of a contract, and aggregate, by using the key aggregation algorithm, the public keys held by the plurality of decentralized application nodes, to generate the public address of the blockchain network; and
invoke a staking interface of the contract, to transfer the tokens at the public address to the staking account.

13. The system according to any one of claims 9 to 12, wherein a first decentralized application node in the plurality of decentralized application nodes is further configured to:
invoke an unstaking interface of the contract, to send an unstaking request to a remaining decentralized application node in the plurality of decentralized application nodes; and
when the first decentralized application node receives an unstaking response sent by the remaining decentralized application node, transfer the tokens from the staking account to the public account, and distribute, to the plurality of decentralized application nodes based on the contract, the tokens transferred to the public account.

14. The system according to any one of claims 9 to 13, wherein the first decentralized application node in the plurality of decentralized application nodes is further configured to:
send cluster configuration information to a target node to establish the DVT network, wherein the cluster configuration information comprises a consensus algorithm, and the consensus algorithm is a crash fault tolerance CFT algorithm; and
a first DVT node in the plurality of DVT nodes is specifically configured to:
receive signatures on the transaction signed by the plurality of DVT nodes in the DVT network by using the staking private keys respectively held by the plurality of DVT nodes, and when a quantity of received signatures reaches a quantity set by using the CFT algorithm, aggregate the received signatures, to obtain the aggregated signature.

15. The system according to claim 14, wherein the target node comprises one or more of a cloud node, an edge node, or a device-side node.

16. The system according to any one of claims 9 to 15, wherein at least one of the plurality of DVT nodes is specifically configured to:
aggregate the staking private keys in a trusted execution environment TEE, to obtain an aggregated private key; and
sign the transaction by using the aggregated private key, to obtain the aggregated signature.

17. A computing device cluster, wherein the computing device cluster comprises at least one computing device, the at least one computing device comprises at least one processor and at least one memory, the at least one memory stores computer-readable instructions, and the at least one processor executes the computer-readable instructions, to cause the computing device cluster to perform the method according to any one of claims 1 to 8.

18. A computer-readable storage medium, comprising computer-readable instructions, wherein the computer-readable instructions are used for implementing the method according to any one of claims 1 to 8.

19. A computer program product, comprising computer-readable instructions, wherein the computer-readable instructions are used for implementing the method according to any one of claims 1 to 8.
